# EUROPÄISCHE PATENTANMELDUNG

(11) **EP 4 527 554 A1**
(43) Veröffentlichungstag der Anmeldung: **26.03.2025**
(21) Anmeldenummer: 23198490.7
(22) Anmeldetag: 20.09.2023
(51) Int. Cl.: B24C 3/26, B24C 3/30, B24C 9/00, B24C 1/08, B29C 37/02, B24C 7/00

(54) **VERFAHREN ZUM ENTGRATEN VON FORMTEILEN UND ENTGRATUNGSVORRICHTUNG**

(71) Anmelder: AW Maschinen- und Anlagentechnik GmbH & Co. KG, 57413 Finnentrop-Heggen (DE)
(72) Erfinder: Klein, Christian, 57223 Kreuztal (DE); Schlosser, Daniel, 57562 Herdorf (DE)
(74) Vertreter: Kalkoff & Partner Patentanwälte mbB

(57) **Zusammenfassung**

Die Erfindung betrifft ein Verfahren zum Entgraten von Formteilen und eine Entgratungsvorrichtung. Um ein Verfahren zum Entgraten von Formteilen und eine Entgratungsvorrichtung bereitzustellen, mit denen ein kosteneffizientes Entgraten möglich ist, ist vorgesehen, dass das Granulat direkt mittels der Kühlvorrichtung und/oder indirekt durch Zuordnen der Kühlvorrichtung zu mindestens einem der mit dem Granulat in Kontakt stehenden Bauteile auf eine Temperatur von mindestens 158 K oder wärmer gekühlt wird.

## Beschreibung

Die Erfindung betrifft ein Verfahren zum Entgraten von Formteilen mittels eines gekühlten Granulats und eine Entgratungsvorrichtung aufweisend eine Gruppe von Bauteilen, umfassend einen Behälter, eine Förderschnecke, ein Schleuderrad, eine ein Granulat führende Leitung und eine Kühlvorrichtung.

Verfahren zum Entgraten von Formteilen und Entgratungsvorrichtungen der eingangs genannten Art sind in vielfältigen Ausgestaltungen aus dem Stand der Technik bekannt und werden dazu benutzt Grate, die von der Oberfläche von Formteilen abstehen, abzutrennen. Im Rahmen herkömmlicher Verfahren wird das gesamte Formteil gekühlt, bevor der Entgratungsprozess eingeleitet wird. Mittels der tiefen Temperaturen verhärten sich die Formteile derart, dass die Formteile verspröden und erhärten. Der Entgratungsprozess umfasst das Beschleunigen von Granulat auf die gekühlten Formteile, wobei die Grate durch das aufschlagende Granulat von den Formteilen gelöst werden und eine gratfreie Oberfläche erzielt wird.

Die bekannten Verfahren und Entgratungsvorrichtungen greifen dabei auf die Verwendung von flüssigem Stickstoff (LN₂) zurück, um die Formteile zu kühlen. Mittels flüssigem Stickstoff werden die Formteile auf eine Temperatur von bis zu 77,15 K (-196 °C) gekühlt, um die Grate von dem erstarrten Formteil abzutrennen. Der Kühlprozess verursacht dabei eine Belastung für das Material des Formteils. Übliche Materialien der Formteile umfassen bspw. Gummi, Elastomere oder auch technische Kunststoffe. Zu beachten ist hierbei, dass sich die geometrischen sowie die materialimmanenten Eigenschaften nicht verändern. Der Einsatz von flüssigem Stickstoff ist dabei sehr kostenintensiv und daher unökonomisch.

Mithin weisen die aus dem Stand der Technik bekannten Verfahren und Entgratungsvorrichtungen zum Entgraten von Formteilen den Nachteil auf, dass der Entgratungsprozess mittels flüssigem Stickstoff hohe Kosten verursacht.

Der Erfindung liegt somit die Aufgabe zugrunde, ein Verfahren zum Entgraten von Formteilen und eine Entgratungsvorrichtungen bereitzustellen, mit dem ein kosteneffizientes Entgraten gewährleistet wird.

Die vorliegende Erfindung löst diese Aufgabe durch ein Verfahren mit den Merkmalen des Anspruchs 1 und durch eine Entgratungsvorrichtungen mit den Merkmalen des Anspruchs 7. Vorteilhafte Weiterbildungen des Verfahrens und der Entgratungsvorrichtungen sind in den abhängigen Ansprüchen angegeben.

Der Erfinder hat hierbei erkannt, dass solch tiefe Temperaturen, wie sie im Rahmen bekannter Verfahren und Entgratungsvorrichtungen bei einer herkömmlichen Kühlung mit flüssigem Stickstoff erreicht werden, für den Entgratungsprozess nicht bei jedem Werkstoff notwendig sind, sondern, dass eine präzise Entgratung auch bei wärmeren Temperaturen erzielt werden kann. Der Erfinder hat in diesem Zusammenhang erkannt, dass die Kerntemperatur der Formteile nicht so tief gekühlt werden muss, dass das gesamte Formteil versprödet, sondern dass lediglich die Grate bzw. die Oberfläche der Formteile so weit gekühlt werden, dass sie erhärten, um diese effizient zu entfernen. Ausschlaggebend hierbei ist, dass die Grate bzw. die Oberfläche des Formteils von einem elastischen zu einem glasartigen Zustand übergehen. Hierbei wird erfindungsgemäß auf den Einsatz von flüssigem Stickstoff verzichtet.

Bei dem erfindungsgemäßen Verfahren zum Entgraten von Formteilen mittels eines gekühlten Granulats mit einer Entgratungsvorrichtung aufweisend eine Kühlvorrichtung und eine Gruppe von Bauteilen, die mit dem Granulat in Kontakt kommen, umfassend ein Schleuderrad, einen Behälter mit einer Entgratungstrommel, eine ein Granulat führende Leitung und eine Förderschnecke, wird das Granulat direkt mittels der Kühlvorrichtung und/oder indirekt durch Zuordnen der Kühlvorrichtung zu mindestens einem der mit dem Granulat in Kontakt stehenden Bauteile auf eine Temperatur von mindestens 158 K oder wärmer gekühlt.

Unter einer direkten Kühlung mittels der Kühlvorrichtung wird verstanden, dass der Kälteübertrag von der Kühlvorrichtung unmittelbar, d.h. ohne Kälteübertrag über ein Bauteil, auf das Granulat stattfindet. Die Kühlvorrichtung kann derart angeordnet sein, dass über die Kühlvorrichtung ein Kühlmedium, wie bspw. eine Kühlflüssigkeit oder ein Kühlgas, in die Entgratungsvorrichtung eingeleitet wird und somit der Kälteübertrag von dem Kühlmedium direkt auf das Granulat stattfindet. Mittels bspw. Umspülen des Granulats mit dem kalten Medium kann das Granulat auf die erforderliche Temperatur gekühlt werden.

Unter einer indirekten Kühlung durch Zuordnen der Kühlvorrichtung zu mindestens einem der mit dem Granulat in Kontakt stehenden Bauteil wird verstanden, dass der Kälteübertrag von der Kühlvorrichtung auf das Granulat über zumindest eines der Bauteile der Entgratungsvorrichtung stattfindet. Das Bauteil wird mittels der Kühlvorrichtung gekühlt und in weiterer Folge wird das Granulat von dem Bauteil gekühlt. Der Kälteübertrag von der Kühlvorrichtung erfolgt z. B. erst zu einer Förderschnecke, einem Schleuderrad und/oder einer ein Granulat führende Leitung. Erfindungsgemäß steht das Granulat in Kontakt mit dem kühlenden Bauteil, das durch die Kühlvorrichtung gekühlt wird, um einen optimalen Kälteübertrag zu gewährleisten.

Eine Kombination der direkten und der indirekten Kühlung führt gemäß einer bevorzugten Ausführung zu einer besonders effizienten Kühlung. Der Kälteübertrag von der Kühlvorrichtung auf das Granulat findet dabei sowohl direkt als auch indirekt statt. Bspw. kann hierbei die direkte Kühlung durch Einbringen eines Kältemediums in die Entgratungsvorrichtung bzw. einzelne Bauteile wie Entgratungstrommel, Behälter für das Granulat oder Förderschnecke mittels der Kühlvorrichtung stattfinden, während die indirekte Kühlung durch Kühlen eines Bauteils mittels der Kühlvorrichtung stattfindet, typisch z. B. eine Leitung für das Granulat mit gekühlter Wand. Es kann gleichzeitig direkt und indirekt gekühlt werden, bevorzugt erfolgt dies aber sequentiell an verschiedenen Bauteilen.

Zwischen Kühlvorrichtung und Granulat können beliebig viele Bauteile angeordnet sein, von denen mindestens eines mit dem Granulat in Kontakt kommt. Bspw. kann der Kälteübertrag von der Kühlvorrichtung auf ein erstes Bauteil, gefolgt von einem zweiten Bauteil stattfinden, wobei das zweite Bauteil in weiterer Folge mit dem Granulat in Kontakt kommt und das Granulat kühlt.

Um eine maximale Kühlung der gesamten Entgratungsvorrichtung zu erreichen, kann auch jedem Bauteil eine eigene Kühlvorrichtung zugeordnet sein. Je nach Bauteil kann eine andere Kühlvorrichtung zugeordnet werden. Um die Kühlung weiter zu optimieren, kann auch mehr als eine Kühlvorrichtung vorgesehen sein, wobei einem Bauteil mehrere Kühlvorrichtungen oder zwei oder mehr Bauteilen jeweils eine Kühlvorrichtung zugeordnet ist.

Die Kühlvorrichtung kann bspw. in Form eines einwandigen Mantels oder einer Manschette um das Bauteil angeordnet sein. Um das Kühlmedium in den einwandigen Mantel oder die Manschette einzuleiten, können Leitungen, Ventile und Öffnungen vorgesehen sein, die das Kühlmedium von der Kühlvorrichtung zu dem Mantel oder der Manschette leiten. Geeignete Kühlmedien können bspw. Wasser, Glykole, Sole oder Kälteöle (Kältemaschinenöle) oder Gase bzw. Gasgemische wie Kaltluft sein. Bspw. kann bei der Förderschnecke die Kühlvorrichtung in Form der Manschette angeordnet sein, die die Förderschnecke oder eine zugehörige Leitung umschließt. Besonders bevorzugt weist die Manschette große Kontaktflächen auf, um den Kälteübertrag zu optimieren. Bei der das Granulat führenden Leitung kann die Kühlvorrichtung in Form des einwandigen Mantels angeordnet sein, um einen effektiven Kälteübertrag von dem einwandigen Mantel zu der das Granulat führenden Leitung zu gewährleisten.

Das Granulat wird dabei erfindungsgemäß auf eine Temperatur von mindestens 158 K oder wärmer gekühlt. 158 K entsprechen ca. -115 °C. Hierbei handelt es sich um die Minimaltemperatur, die das Granulat erreicht. Das Granulat wird erfindungsgemäß nicht tiefer bzw. kälter als 158 K gekühlt.

Das Granulat kann bspw. kugelförmig sein, wie z. B. Granulat aus Glas, Keramik oder Metall oder eine unregelmäßige Form, wie bspw. Sandkörner, aufweisen. Das Material des Granulats kann Kunststoff, Metall, Keramik, Sand oder ein ähnliches, für Entgratungsprozesse geeignetes Material sein. Ferner ist es vorteilhaft ein Material zu wählen, das sich gut auf die erforderliche Temperatur kühlen lässt und einen guten Wärmeübergang aufweist. Die Größe des Granulats kann von dem zu bearbeitenden Formteil und Material des Formteils abhängig sein. Besonders bevorzugt weist das Granulat eine durchschnittliche Größe von 0,1 µm bis 1 mm auf. Das kalte Granulat wird mit dem zu entgratenden Formteilen gemischt. Dadurch kühlen die Formteile bevorzugt mindestens im Bereich der Grate auf eine Temperatur unter der Glasübergangstemperatur. Die Grate der Formteile verspröden und werden durch den Kontakt mit dem kalten Granulat entfernt. Somit kann das abgekühlte Granulat die Formteile abkühlen und gleichzeitig entgraten.

Unter einem Entgratungskreislauf kann der Prozess des Entgratens sowie die Wiederaufbereitung des Granulats verstanden werden. Dieser Prozess kann das Kühlen des Granulats auf eine erforderliche Temperatur, das Befördern des gekühlten Granulats durch die Granulat führende Leitung zu der Förderschnecke und im Weiteren zu dem Schleuderrad, das Beschleunigen des Granulats in Richtung der Formteile, das Entgraten der Formteile mittels des gekühlten Granulats sowie das Auffangen des Granulats umfassen, wobei dieser Prozess kontinuierlich wiederholt wird. Das beschleunigte Granulat trifft auf die versprödeten Grate, die durch die Aufprallenergie vom Formteil getrennt werden. Die abgetrennten Grate sowie der beim Entgratungsprozess entstehende Staub werden im Weiteren von dem Granulat getrennt, um unnötiges Kühlen der abgetrennten Grate sowie des Staubs zu vermeiden. Bevorzugt findet die Aufbereitung des mit abgetrennten Graten und Staub vermischten Granulats in einem Zyklon statt. Das aufbereitete Granulat kann danach wieder gekühlt und dem Entgratungsprozess zugeführt werden. Vorteilhaft an diesem Verfahren ist, dass das zu entgratende Formteil nicht vollständig erstarren muss. Es hat sich als ausreichend herausgestellt, wenn die abzutrennenden Grate und ggf. die Oberfläche des Formteils eine Temperatur unterhalb der Glastemperatur annehmen.

Die Erfindung betrifft weiter eine Entgratungsvorrichtung aufweisend eine Kühlvorrichtung und eine Gruppe von Bauteilen, die mit dem Granulat in Kontakt kommen, umfassend ein Schleuderrad, einen Behälter mit einer Entgratungstrommel, eine ein Granulat führende Leitung und eine Förderschnecke, wobei die Kühlvorrichtung dazu ausgelegt ist, das Granulat direkt und/oder indirekt durch Zuordnen der Kühlvorrichtung zu mindestens einem der mit dem Granulat in Kontakt stehenden Bauteile auf eine Temperatur von mindestens 158 K zu kühlen.

Das erfindungsgemäße Verfahren und Entgratungsvorrichtung zeichnen sich durch das effiziente, kostengünstige Kühlen des Granulats aus. Hierbei kann auf den Einsatz von flüssigem Stickstoff verzichtet werden, da mit der erfindungsgemäßen Kühlvorrichtung ausreichend tiefe Temperaturen erreicht werden können, um einen präzisen Entgratungsprozess zu gewährleisten. Im Rahmen der Erfindung wird nur das Granulat zur Einleitung des Entgratungsprozesses gekühlt. Weiter kann optional auf ein separates Kühlen der zu entgratenden Formteile verzichtet werden.

Nach einer vorteilhaften Ausgestaltung der Erfindung ist vorgesehen, dass das Granulat unter eine Glasübergangstemperatur des Formteils gekühlt wird. Unter der Glasübergangstemperatur wird jene Temperatur verstanden, bei der ein amorpher Feststoff von einem weichen, gummiartigen Zustand in einen starren, glasartigen Zustand übergeht. Bei amorphen Kunststoffen trennt der Glasübergang den kälteren, spröden, energieelastischen Temperaturbereich, auch als Glasbereich bekannt, vom wärmeren, weichen entropieelastischen Bereich bzw. gummielastischen Bereich. Die Glasübergangstemperatur hängt von der Art des Kunststoffs ab. Die Glasübergangstemperatur eines Kunststoffes bzw. Elastomers steigt mit seiner Vernetzungsdichte, d. h. die Glasübergangstemperatur eines Duroplasts ist bspw. deutlich höher als die eines Thermoplasts. Die Glasübergangstemperatur für PE-HD liegt z. B. bei ca. 203 K bis ca. 223 K (ca. -70 °C bis ca. -50 °C), während die Glasübergangstemperatur für PE-LD zwischen ca. 153 K bis ca. 163 K (-120 °C bis -110 °C) liegt. Andere Kunststoffe wie bspw. PP weisen eine Glasübergangstemperatur im Bereich von ca. 0 °C bis 10 °C auf. Durch das Verspröden des Kunststoffs durch Abkühlen auf eine Temperatur unterhalb der Glasübergangstemperatur kann das Entgraten effizient durchgeführt werden. Weitere Materialien der Formteile umfassen bspw. faserverstärkte Kunststoffe, Zink, Aluminium, Magnesium, Titan, Verbundwerkstoffe, Sinterwerkstoffe, Polyurethan oder Schaumstoffe.

Nach einer besonders bevorzugten Weiterbildung der Erfindung ist vorgesehen, dass das Granulat, das Formteil und/oder mindestens eines der Bauteile mittels der eine Kaltluftvorrichtung aufweisende und tiefkalte Luft in die Entgratungsvorrichtung einbringende Kühlvorrichtung gekühlt wird. Die Kühlvorrichtung kann eine Kaltluftvorrichtung aufweisen, mittels der tiefkalte Luft (bis 158 K bzw. bis -115 °C) als Kühlmedium in die Entgratungsvorrichtung eingeleitet und nach Reinigung in einem Zyklon zurück in die Entgratungsvorrichtung geleitet wird. Somit wird gleichzeitig das Granulat, das Formteil und die gesamte Entgratungsvorrichtung gekühlt.

Im Falle einer vorteilhaften Ausgestaltung der Erfindung ist vorgesehen, dass das Granulat im Bereich der das Granulat führenden Leitung gekühlt wird, insbesondere in der Förderschnecke, die zumindest abschnittsweise in der das Granulat führenden Leitung angeordnet ist, wobei die Förderschnecke mittels der Kühlvorrichtung auf eine Temperatur von mindestens 223 K oder wärmer gekühlt wird. 223 K entsprechen ca. -50 °C. Das Granulat kann im Bereich der Förderschnecke durch Zuordnen der Kühlvorrichtung zu der in der das Granulat führenden Leitung angeordneten Förderschnecke gekühlt werden. Der Kälteübertrag kann indirekt stattfinden, indem die Kühlvorrichtung die Förderschnecke kühlt, die im Weiteren das Granulat kühlt.

Vorteilhaft kann in einer vorhandenen Entgratungsvorrichtung ein Bauteil, z. B. die Förderschnecke, die Entgratungstrommel oder eine Leitung, durch eine Kühlvorrichtung, bspw. in Form einer gekühlten Wand, ergänzt bzw. erweitert werden. Das vorhandene Bauteil kann z. B. in einer vorhandenen Entgratungsvorrichtung durch ein gleiches Bauteil, das jedoch eine Kühlvorrichtung aufweist, ersetzt werden: eine Förderschnecke kann durch eine Förderschnecke mit Kühlvorrichtung ersetzt werden, eine Entgratungstrommel durch eine solche mit Kühlvorrichtung oder eine Leitung für das Granulat durch eine solche mit Kühlvorrichtung. Eine vorhandene Entgratungsvorrichtung kann also mit geringem Aufwand erfindungsgemäß umgerüstet werden.

Gemäß einer besonders vorteilhaften Ausführungsform der Erfindung ist vorgesehen, dass das Granulat auf eine Temperatur im Bereich von mindestens 158 K bis maximal 298 K, besonders bevorzugt im Bereich von mindestens 158 K bis maximal 273 K, gekühlt wird. Um den Entgratungsprozess möglichst effizient zu gestalten, kann das Granulat auf eine Temperatur im Bereich von ca. 158 K (-115 °C) bis ca. 298 K (ca. 25 °C), besonders bevorzugt im Bereich von ca. 158 K (-115 °C) bis ca. 273 K (ca. 0 °C), gekühlt werden. Ganz besonders bevorzugt wird das Granulat auf eine Temperatur im Bereich von ca. 223 K (-50 °C) bis ca. 263 K (-10 °C) gekühlt.

Nach einer bevorzugten Ausführungsform der Erfindung ist vorgesehen, dass mittels eines Wirbelrohrs ein beim Entgratungsprozess entstehender Staub einer Entstaubungseinrichtung zugeführt wird. Beim Entgratungsprozess kommt es zu einer Staubentwicklung. Bei konventionellen, d.h. mittels flüssigem Stickstoff gekühlten Entgratungsanlagen wird der Staub über den Gasüberschuss des verdampfenden flüssigen Stickstoffs einer Entstaubungseinrichtung zugeführt. Im Rahmen der vorliegenden Erfindung, die ohne den Einsatz von flüssigem Stickstoff kühlt, kann ein Wirbelrohr einen kalten Gasstrom erzeugen, um den beim Entgratungsprozess entstehenden Staub einer Entstaubungseinrichtung zuzuführen. Ferner wird vermindert, dass der Staub im Kreislauf mitgeführt wird und z. B. unnötig gekühlt wird.

Nach einer besonders bevorzugten Weiterbildung der Erfindung ist vorgesehen, dass ein Kühlkreislauf von einem Entgratungskreislauf entkoppelt ist. Unter einem Kühlkreislauf kann verstanden werden, dass die Kühlvorrichtung mindestens eine Kühlleitung, eine Abwärmeleitung, ein Kühlmedium und eine Kühleinheit aufweist. Die Kühlleitung kann das Kühlmedium von der Kühleinheit zu einem der Bauteile führen, die mit dem Granulat in Kontakt kommen, um dieses Bauteil zu kühlen. Die Abwärmeleitung kann das von dem Bauteil erwärmte Kühlmedium wieder der Kühleinheit zuführen, um das Kühlmedium erneut zu kühlen. Die Kühleinheit kann das Kühlmedium auf die erforderliche Temperatur kühlen. Bevorzugt verbleibt das Kühlmedium in der Kühlleitung. Das Kühlmedium kann nicht in den Entgratungskreislauf gebracht werden.

Unter der Entkopplung des Kühlkreislaufes von dem Entgratungskreislauf wird verstanden, dass diese Kreisläufe räumlich voneinander getrennt sind. Im Rahmen dieser Ausführungsform kann vorgesehen sein, dass kein Kühlmedium in den Entgratungskreislauf eingeleitet wird. Das Kühlmedium kann bei entkoppeltem Kühl- und Entgratungskreislauf ausschließlich indirekt Kälte auf ein Bauteil der Entgratungsvorrichtung übertragen.

Nach einer vorteilhaften Ausgestaltung der Erfindung ist vorgesehen, dass mindestens eines der Bauteile eine Kühlvorrichtung (20) aufweist. Um weiter die Kühlung zu optimieren, kann vorgesehen sein, dass die Kühlvorrichtung in jene Bauteile integriert ist, die eine dem Granulat zugewandte Seite aufweisen. So kann die Kühlvorrichtung oder Teile davon an der Wand des Bauteils angeordnet sein oder das Bauteil durchsetzen, z. B. ein Zentralrohr einer Förderschnecke. Somit kann das Bauteil mit der integrierten Kühlvorrichtung kompakt konstruiert sein, ohne dass die Kühlvorrichtung viel Raum einnimmt.

Besonders bevorzugt weist die Förderschnecke eine Kühlvorrichtung auf bzw. wird durch diese ergänzt. Die Förderschnecke kann dabei im Bereich der Schneckenwelle und/oder Schneckenflügel Leitungen aufweisen, um ein Durchleiten von Kühlmedium zu gewährleisten. Zusätzlich oder alternativ kann die Förderschnecke im Bereich des Fördertrogs Leitungen aufweisen, um ein Durchleiten von Kühlmedium zu gewährleisten. Die Förderschnecke kann derart gestaltet sein, so dass in herkömmlichen Entgratungsvorrichtungen die Förderschnecke austauschbar ist. Vorteilhaft hierbei ist, dass die Kühlung im Bereich der Förderschnecke besonders effizient ist und der Einsatz von weiteren Kühlvorrichtungen entfällt.

Gemäß einer besonders vorteilhaften Ausführungsform der Erfindung ist vorgesehen, dass die Förderschnecke zumindest abschnittsweise in der das Granulat führenden Leitung angeordnet ist, wobei die Kühlvorrichtung an oder in der das Granulat führenden Leitung angeordnet ist. Alternativ ist die Kühlvorrichtung an bzw. in der Förderschnecke angeordnet. Die Kühlung des Granulats im Bereich der Förderschnecke kann besonders vorteilhaft sein, da das Granulat bei einer großen Öffnung der Förderschnecke in einer geringen Dichte vorliegt und somit effizient gekühlt werden kann.

Besonderen Wert kann weiter auf die Isolation der einzelnen Komponenten gelegt werden, um den Wärmeeintrag von außen zu minimieren. Beispielsweise kann hierzu ein weiterer Mantel um die Bauteile angeordnet werden, um Wärme abzuschirmen und die Kälte innerhalb der Entgratungsvorrichtung zu konservieren.

Ausführungsbeispiele der Erfindung werden nachstehend mit Bezug auf die Zeichnungen dargelegt. Diese sollen die Erfindung jedoch nicht einschränken, sondern nur erläutern. In den Zeichnungen zeigen:
Fig. 1 eine schematische Darstellung einer Entgratungsvorrichtungen in einer ersten Ausführungsform;
Fig. 2 eine schematische Darstellung einer Entgratungsvorrichtungen in einer zweiten Ausführungsform;
Fig. 3 eine schematische Darstellung einer Entgratungsvorrichtungen in einer dritten Ausführungsform.

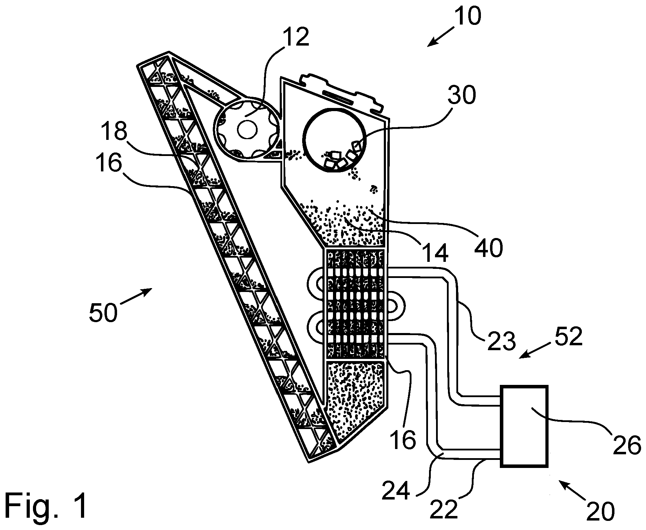

Die erfindungsgemäße Entgratungsvorrichtung 10 weist gemäß Fig. 1 eine Gruppe von Bauteilen auf, die mit Granulat zum Entgraten von Formteilen in Kontakt kommen; diese Gruppe von Bauteilen umfasst ein Schleuderrad 12, eine Entgratungstrommel 14, eine das Granulat führende Leitung 16 sowie eine Förderschnecke 18 auf. Diese Bauteile bilden zusammen einen Entgratungskreislauf 50. In dem Behälter 14 befindet sich eine Entgratungstrommel 15 und das Granulat 40. Ferner weist die erfindungsgemäße Entgratungsvorrichtung 10 eine Kühlvorrichtung 20 auf.

Die Kühlvorrichtung 20 umfasst in dieser Ausführungsform eine Kühlleitung 22, eine Abwärmeleitung 23, ein Kühlmedium 24 sowie eine Kühleinheit 26. Diese Komponenten bilden zusammen einen Kühlkreislauf 52. Durch die Kühlleitung 22 wird das Kühlmedium 24 zu dem zu kühlenden Bauteil der Entgratungsvorrichtung 10, das mit dem Granulat in Kontakt kommt, geleitet. Durch die Abwärmeleitung 23 wird das erwärmte Kühlmedium 24 wieder der Kühlvorrichtung 20 zugeführt, um erneut gekühlt und wieder dem zu kühlenden Bauteil zugeführt zu werden.

Das Granulat 40 wird der das Granulat 40 führenden Leitung 16 zugeführt, wobei das Granulat 40 in weiterer Folge gekühlt wird. Das gekühlte Granulat 40 wird durch die Förderschnecke 18, die in der das Granulat führenden Leitung 16 angeordnet ist, dem Schleuderrad 12 zugeführt. Das Schleuderrad 12 beschleunigt das gekühlte Granulat 40 in Richtung auf die Formteile 30 in der Entgratungstrommel 15. Hierdurch werden die Formteile 30 durch das gekühlte Granulat 40 gekühlt und anschließend, nachdem die Formteile, insbesondere deren Grate, ausreichend erstarrt sind, auch entgratet. Nach dem Entgratungsprozess tritt das Granulat aus der Entgratungstrommel 15 aus und wird wieder in dem Behälter 14 gesammelt, bevor der Entgratungskreislauf 50 erneut beginnt. Alternativ sammelt sich das Granulat 40 in der Entgratungstrommel 15. Ferner ist ein Wirbelrohr (hier nicht dargestellt) vorgesehen, das den beim Entgratungsprozess entstehenden Staub einer Entstaubungseinrichtung zuführt.

In einer ersten Ausführungsform ist gemäß Fig. 1 die Kühlvorrichtung 20 der das Granulat 40 führenden Leitung 16 zugeordnet. Die Kühlleitung 22 ist in Form einer Manschette um die das Granulat 40 führenden Leitung 16 herum angeordnet. Das Granulat 40 steht in Kontakt mit der das Granulat 40 führenden Leitung 16. Der Kälteübertrag findet hierbei indirekt statt, da erst die das Granulat 40 führende Leitung 16 gekühlt wird, die im Weiteren dann das Granulat 40 kühlt. Das Kühlmedium 24 ist hier ein Kälteöl und kühlt die das Granulat 40 führende Leitung 16 auf eine Temperatur von bis zu 158 K, um im Weiteren das Granulat 40 auf diese Temperatur zu kühlen. Das Granulat 40 wird auf eine Temperatur unterhalb der Glasübergangstemperatur des Formteils 30 gekühlt. Im Rahmen der ersten Ausführungsform wird das Granulat 40 gekühlt, bevor das gekühlte Granulat 40 der Förderschnecke 18 zugeführt wird. Der Kühlkreislauf 52 ist gemäß dieser ersten Ausführungsform von dem Entgratungskreislauf 50 entkoppelt, da das Kühlmedium 24 nicht in den Entgratungskreislauf 50 eintritt.

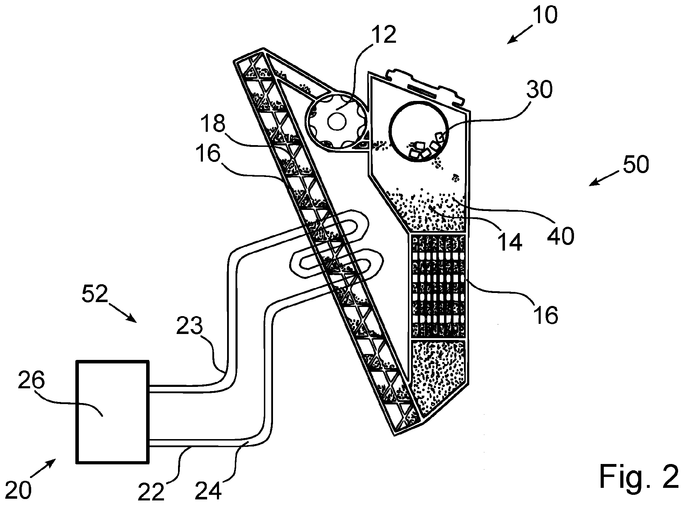

In einer zweiten Ausführungsform ist gemäß Fig. 2 die Kühlvorrichtung 20 zu einer das Granulat 40 führenden Leitung 16 zugeordnet, wobei die Förderschnecke 18 in der das Granulat 40 führenden Leitung 16 angeordnet ist. Das Granulat 40 wird im Rahmen dieser zweiten Ausführungsform in der Förderschnecke 18 gekühlt. Auch gemäß dieser Ausführungsform findet ein indirekter Kälteübertrag statt, da erst die das Granulat 40 führende Leitung 16, dann die Förderschnecke 18 gekühlt werden. Die Förderschnecke 18 kühlt dann im Weiteren das Granulat 40. Der Kälteübertrag ist hierbei besonders effizient, da das Granulat 40 wegen der größeren Oberfläche der Förderschnecke 18 in geringerer Dichte vorliegt, als in der ersten Ausführungsform. Alternativ oder zusätzlich ist im Rahmen der zweiten Ausführungsform vorgesehen, dass die Förderschnecke 18 mit der Kühlvorrichtung 20 durchsetzt ist (hier nicht dargestellt). Hierzu weist die Förderschnecke 18 weitere Leitungen sowie eine zusätzliche Wandung auf, durch die Kühlmedium 24 direkt in die Förderschnecke 18 geleitet werden.

Bei der ersten und der zweiten Ausführung wird lediglich das Granulat 40, nicht jedoch die zu entgratenden Formteile 30 gekühlt.

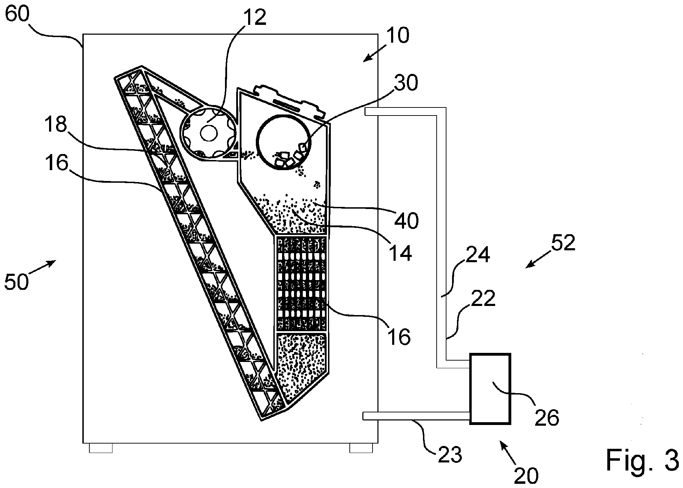

In einer dritten Ausführungsform ist gemäß Fig. 3 die Entgratungsvorrichtung 10 in einem Gehäuse 60 angeordnet. Alternativ sind nur der Behälter 14 mit der Entgratungstrommel 15 und das Schleuderrad 12 in dem Gehäuse 60 angeordnet (hier nicht dargestellt). Die Kühlvorrichtung 20 ist immer außerhalb des Gehäuses 60 angeordnet und weist eine Kaltluftvorrichtung auf, die durch die Kühlleitung 22 kühles Medium 24, hier tiefkalte Luft, in das Gehäuse 60 speist. Durch die Abwärmeleitung 23 wird von der Entgratungsvorrichtung 10 erwärmte Luft wieder der Kühlvorrichtung 20 zugeführt, um diese erneut zu kühlen und wieder der Entgratungsvorrichtung 10 zu zuführen. Diese Ausführungsform sieht vor, dass das Granulat 40, die Formteile 30 sowie die gesamte Entgratungsvorrichtung 10 gekühlt werden. Die Entgratungsvorrichtung 10 wird mittels tiefkalter Luft auf eine Temperatur von 158 K gekühlt. Die Kühlung erfolgt in der dritten Ausführungsform direkt, da die tiefkalte Luft sowohl das Granulat 40, die Formteile 30 und die Entgratungsvorrichtung 10 unmittelbar kühlt.

### Bezugszeichenliste

- 10: Entgratungsvorrichtung
- 12: Schleuderrad
- 14: Behälter
- 15: Entgratungstrommel
- 16: Granulat führende Leitung
- 18: Förderschnecke
- 20: Kühlvorrichtung
- 22: Kühlleitung
- 23: Abwärmeleitung
- 24: Kühlmedium
- 26: Kühleinheit
- 30: Formteil
- 40: Granulat
- 50: Entgratungskreislauf
- 52: Kühlkreislauf
- 60: Gehäuse

## Patentansprüche

1. Verfahren zum Entgraten von Formteilen (30) mittels eines gekühlten Granulats (40) mit einer Entgratungsvorrichtung (10) aufweisend eine Kühlvorrichtung (20) und eine Gruppe von Bauteilen, umfassend ein Schleuderrad (12), einen Behälter (14) mit einer Entgratungstrommel (15), eine ein Granulat (40) führende Leitung (16) und eine Förderschnecke (18), die mit dem Granulat in Kontakt kommen, wobei das Granulat (40)
- direkt mittels der Kühlvorrichtung (20) und/oder
- indirekt durch Zuordnen der Kühlvorrichtung (20) zu mindestens einem der mit dem Granulat (40) in Kontakt stehenden Bauteile auf eine Temperatur von mindestens 158 K oder wärmer gekühlt wird.

2. Verfahren zum Entgraten von Formteilen (30) nach Anspruch 1, **dadurch gekennzeichnet, dass** das Granulat (40) unter eine Glasübergangstemperatur des Formteils (30) gekühlt wird.

3. Verfahren zum Entgraten von Formteilen (30) nach Anspruch 1 oder 2, **dadurch gekennzeichnet, dass** das Granulat (40), das Formteil und/oder mindestens eines der Bauteile mittels der eine Kaltluftvorrichtung aufweisende und tiefkalte Luft in die Entgratungsvorrichtung (10) einbringende Kühlvorrichtung (20) gekühlt wird.

4. Verfahren zum Entgraten von Formteilen (30) nach Anspruch 1 oder 2, **dadurch gekennzeichnet, dass** das Granulat (40) im Bereich der das Granulat (40) führenden Leitung (16) gekühlt wird, insbesondere in der zumindest abschnittsweise in der das Granulat (40) führenden Leitung (16) angeordneten Förderschnecke (18), wobei die Förderschnecke (18) mittels der Kühlvorrichtung (20) auf eine Temperatur von mindestens 223 K oder wärmer gekühlt wird.

5. Verfahren zum Entgraten von Formteilen (30) nach einem der vorangehenden Ansprüche, **dadurch gekennzeichnet, dass** das Granulat (40) auf eine Temperatur im Bereich von mindestens 158 K bis maximal 298 K, besonders bevorzugt im Bereich von mindestens 158 K bis maximal 273 K, gekühlt wird.

6. Verfahren zum Entgraten von Formteilen (30) nach einem der vorangehenden Ansprüche, **dadurch gekennzeichnet, dass** mittels eines Wirbelrohrs ein beim Entgratungsprozess entstehender Staub einer Entstaubungseinrichtung zugeführt wird.

7. Entgratungsvorrichtung (10) aufweisend eine Kühlvorrichtung (20) und eine Gruppe von Bauteilen, umfassend ein Schleuderrad (12), einen Behälter (14) mit einer Entgratungstrommel (15), eine ein Granulat (40) führende Leitung (16) und eine Förderschnecke (18), die mit dem Granulat in Kontakt stehen, wobei die Kühlvorrichtung (20) dazu ausgelegt ist, das Granulat (40) direkt und/oder indirekt durch Zuordnen der Kühlvorrichtung (20) zu mindestens einem der mit dem Granulat (40) in Kontakt stehenden Bauteile auf eine Temperatur von mindestens 158 K oder wärmer zu kühlen.

8. Entgratungsvorrichtung (10) nach Anspruch 7, **dadurch gekennzeichnet, dass** ein Kühlkreislauf (52) von einem Entgratungskreislauf (50) entkoppelt ist.

9. Entgratungsvorrichtung (10) nach einem der Ansprüche 7 oder 8, **dadurch gekennzeichnet, dass** mindestens eines der Bauteile eine Kühlvorrichtung (20) aufweist.

10. Entgratungsvorrichtung (10) nach einem der Ansprüche 7 bis 9, **dadurch gekennzeichnet, dass** die Förderschnecke (18) zumindest abschnittsweise in der das Granulat (40) führenden Leitung angeordnet ist, wobei die Kühlvorrichtung (20) an oder in der Granulat (40) führenden Leitung (16) angeordnet ist.
